# EUROPÄISCHE PATENTANMELDUNG

(11) **EP 0 733 815 A2**
(43) Veröffentlichungstag der Anmeldung: **25.09.1996**
(21) Anmeldenummer: 96103907.0
(22) Anmeldetag: 13.03.1996
(51) Int. Cl.: F16C 11/06

(54) **Winkelgelenk**

(30) Priorität: 18.03.1995 DE 19509920
(71) Anmelder: SUSPA COMPART Aktiengesellschaft, D-90518 Altdorf (DE)
(72) Erfinder: Bauer, Hans-Peter, 90518 Altdorf (DE); Berzl, Siegfried, 90518 Altdorf (DE)
(74) Vertreter: Rau, Manfred, Dr. Dipl.-Ing.

(57) **Zusammenfassung**

Ein Winkelgelenk weist eine Kugelpfanne (22) auf, die mit einer Ausnehmung (26) zur Aufnahme eines Kugelzapfens versehen ist. Als Sicherungselement ist mindestens ein Federstab (31) vorgesehen, der eine Durchbrechung (36) der Ausnehmung (26) durchsetzt. Er ist in einem Führungskanal (35) angeordnet, der sich zu einem Ende (34) des Federstabes (31) hin erweitert und gegenüber der Einschubrichtung (48) des Kugelkopfes geneigt ist.

## Beschreibung

Die Erfindung betrifft ein Winkelgelenk nach dem Oberbegriff des Anspruches 1.

Aus dem DE-GM 73 27 049 ist ein Winkelgelenk der gattungsgemäßen Art bekannt, das als Sicherungselement einen Federbügel aufweist. Dieser weist aufeinanderzu durchgebogene Schenkel auf, die Durchbrechungen in der Kugelpfanne durchsetzen, so daß diese durchgebogenen Bereiche in der Ausnehmung der Kugelpfanne angeordnet sind. Beim Einschieben des Kugelkopfes des Kugelzapfens werden diese beiden in die Ausnehmung der Kugelpfanne hineinragenden durchgebogenen Abschnitte von der Kugelfläche nach außen gedrückt, so daß diese eingerastet werden kann. Die Kugelfläche weist eine Hinterschneidung auf, in die die beiden durchgebogenen Bereiche des Sicherungselementes eingreifen, wodurch ein unbeabsichtigtes Herausziehen des Kugelkopfes aus der Kugelpfanne vermieden wird.

Aus DIN 71805 sind Winkelgelenke bekannt, deren Ausnehmung eine Nut für einen Sicherungsbügel aufweist, der nach dem Einschieben des Kugelkopfes in die Ausnehmung der Kugelpfanne aufgesetzt wird.

Aus dem DE G 83 15 429.9 U1 ist weiterhin ein Winkelgelenk bekannt, dessen Kugelpfanne eine Ringnut aufweist, in der ein Sprengring angeordnet ist. Als Gegenfläche für den Sprengring ist ein Sicherungsbügel vorgesehen, der beidseitig im Bereich des Grundes der Ringnut mittels tangential verlaufender Bohrungen in der Kugelpfanne mit dem Sprengring in Wirkverbindung steht. Beim Eindrücken des Kugelzapfens in die Kugelpfanne weitet sich der Sprengring im oberen Bereich der Ringnut so weit auf, daß die Kugel des Kugelzapfens in die kugelkalottenförmige Ausnehmung gelangt. Anschließend gleitet der Sprengring infolge seiner Federwirkung an der Oberfläche der Kugel in den unteren Bereich ab und kommt an der dem Zapfen zugekehrten Kugelfläche zur Anlage. Da der Sicherungsbügel die Gegenfläche für den Sprengring an zwei gegenüberliegenden Stellen bildet, kann sich der Sprengring nicht radial nach außen verschieben, auch wenn eine große Auszugskraft auf die Kugel des Kugelzapfens wirkt. Zur Demontage des Kugelzapfens wird der Sicherungsbügel so weit in Längsrichtung der Kugelpfanne verschoben, bis der Sicherungsbügel den unteren Nutbereich der Ringnut frei gibt, so daß sich der Sprengring auf den notwendigen Durchmesser der Kugel aufweiten kann und die Kugel des Kugelzapfens mit relativ geringer Kraft aus der Kugelpfanne herausziehbar ist.

Der Erfindung liegt die Aufgabe zugrunde, ein Winkelgelenk der gattungsgemäßen Art so auszugestalten, daß einerseits die Kugelpfanne und das Sicherungselement einfach ausgebildet sind und andererseits eine einfache Montage und eine zuverlässige Halterung erreicht wird.

Diese Aufgabe wird erfindungsgemäß durch die Merkmale im Kennzeichnungsteil des Anspruches 1 erreicht. Durch die erfindungsgemäße Ausgestaltung der Kugelpfanne mit den Führungskanälen und durch die Ausgestaltung des Sicherungselementes als zumindest ein Federstab werden die erwähnten Teile sehr einfach in ihrem Aufbau. Durch die Ausgestaltung des Führungskanals und die Anordnung des Federstabes in ihm wird erreicht, daß ein Teil des Federstabes beim Einschieben des Kugelkopfes in die Ausnehmung zwangsläufig in einer zur Einschubrichtung geneigten Ebene ausweicht; es sind beim Einschieben also keine erheblichen Kräfte aufzuwenden. Andererseits wird sichergestellt, daß nach dem Einschieben des Kugelkopfes in die Ausnehmung der Kugelpfanne bei entgegen der Einschubrichtung gerichteten Zugkräften auf den Kugelkopf dieser den Federstab gegen eine Begrenzungswand des Führungskanals preßt, so daß ein Auseinanderziehen von Kugelpfanne und Kugelzapfen ausgeschlossen ist.

Die Unteransprüche geben zahlreiche vorteilhafte und zum Teil erfinderische Ausgestaltungen wieder.

Weitere Einzelheiten der Erfindung ergeben sich aus der nachfolgenden Beschreibung mehrerer Ausführungsbeispiele anhand der Zeichnung. Es zeigen
- Fig. 1: eine Gasfeder mit einer Kugelpfanne eines Winkelgelenks,
- Fig. 2: einen Längsschnitt durch eine erste Ausführungsform einer Kugelpfanne entsprechend der Schnittlinie II-II in Fig. 3,
- Fig. 3: einen Querschnitt durch die Kugelpfanne entsprechend der Schnittlinie III-III in Fig. 2,
- Fig. 4: eine Stirnansicht der Kugelpfanne gemäß dem Sichtpfeil IV in den Fig. 2 und 3,
- Fig. 5: einen Schnitt durch die Kugelpfanne gemäß der Schnittlinie V-V in Fig. 4,
- Fig. 6: die erste Ausführungsform einer Kugelpfanne zu Beginn der Montage eines Kugelzapfens in einer Querschnittsdarstellung gemäß der Schnittlinie VI-VI in Fig. 7,
- Fig. 7: die Darstellung von Kugelpfanne und Kugelzapfen in einer Schnittdarstellung gemäß der Schnittlinie VII-VII in Fig. 6,
- Fig. 8: eine Fig. 6 entsprechende Darstellung mit teilweise in die Kugelpfanne eingeschobenem Kugelzapfen,
- Fig. 9: eine Fig. 7 entsprechende Darstellung mit teilweise in die Kugelpfanne eingeschobenem Kugelzapfen,
- Fig. 10: eine Fig. 6 und 8 entsprechende Darstellung mit vollständig in die Kugelpfanne eingeschobenem Kugelzapfen,
- Fig. 11: eine Fig. 7 und 9 entsprechende Darstellung mit vollständig in die Kugelpfanne eingeschobenem Kugelzapfen,
- Fig. 12: eine zweite Ausführungsform einer Kugelpfanne in einer Darstellung entsprechend Fig. 3,
- Fig. 13: eine dritte Ausführungsform einer Kugelpfanne in einer Darstellung entsprechend Fig. 3 und 12,
- Fig. 14: eine vierte Ausführungsform einer Kugelpfanne in einer Darstellung entsprechend Fig. 2 in an eine Gasfeder montiertem Zustand,
- Fig. 15: eine fünfte Ausführungsform einer Kugelpfanne in einer Darstellung entsprechend Fig. 3 in an eine Gasfeder montiertem Zustand,
- Fig. 16: eine sechste Ausführungsform einer Kugelpfanne in einem Längsschnitt gemäß der Schnittlinie XVI-XVI in Fig. 17 in an eine Gasfeder montiertem Zustand,
- Fig. 17: die Kugelpfanne nach Fig. 16 im Längsschnitt,
- Fig. 18: einen Querschnitt durch die Kugelpfanne gemäß der Schnittlinie XVIII-XVIII in Fig. 17,
- Fig. 19: einen Schnitt durch die Kugelpfanne entsprechend der Schnittlinie XIX-XIX in Fig. 17,
- Fig. 20: die sechste Ausführungsform einer Kugelpfanne zu Beginn der Montage eines Kugelzapfens in einer Querschnittsdarstellung entsprechend Fig. 18,
- Fig. 21: eine Fig. 20 entsprechende Darstellung mit teilweise in die Kugelpfanne eingeschobenem Kugelzapfen und
- Fig. 22: eine den Fig. 20 und 21 entsprechende Darstellung mit vollständig in die Kugelpfanne eingeschobenem Kugelzapfen.

Die in der Zeichnung dargestellte Gasfeder weist ein im wesentlichen aus einem zylindrischen Rohr bestehendes Gehäuse 1 mit einer Mittel-LängsAchse 2 und einer koaxial zur Achse 2 angeordneten im Gehäuse 1 verschiebbaren Kolbenstange 3 auf. Die Kolbenstange 3 ist an einem Ende 4
des Gehäuses 1 aus diesem herausgeführt. Am anderen Ende 5 ist das Gehäuse 1 gasdicht verschlossen.

An ihrem im Gehäuse 1 befindlichen Ende ist die Kolbenstange 3 mit einem Kolben 6 versehen, der an der Innenwand 7 des Gehäuses 1 geführt ist. Der Kolben 6 ist in üblicher Weise als sogenannter Dämpfungskolben ausgebildet, und zwar mit unterschiedlicher Dämpfungscharakteristik für das Einschieben der Kolbenstange 3 in das Gehäuse 1 bzw. für das Ausfahren der Kolbenstange 3 aus dem Gehäuse 1.

Die Kolbenstange 3 ist am Ende 4 des Gehäuses 1 in einer Führung abgedichtet geführt. Die Führung selber besteht aus zwei Teilen, nämlich einer Anschlag- und Distanz-Hülse 8 mit einem Führungsabschnitt 9 für die Kolbenstange 3 und aus einem Führungs-Ring 10. Die Hülse 8 ist dem Kolben 6 zugewandt, wobei auch der Führungsabschnitt 9 dem Kolben 6 zugewandt ist. Der Führungs-Ring 10 ist dem Ende 4 des Gehäuses 1 zugewandt. Zwischen der Hülse 8 und dem Ring 10 ist eine Dichtung 11 angeordnet, die mit einem Außen-Dichtungsring 12 gegen die Innenwand 7 des Gehäuses 1 dichtend anliegt. Sie weist weiterhin einen einstückig mit dem Außen-Dichtungsring 12 ausgebildeten Innen-Dichtungsring 13 auf, der dichtend gegen die Kolbenstange 3 anliegt. Dieser Innen-Dichtungsring 13 kann mit an der Kolbenstange 3 anliegenden Dichtungslippen ausgebildet sein, die verhältnismäßig empfindlich sind.

Die Hülse 8 weist eine Außen-Umfangsnut 14 auf, in die eine im Gehäuse 1 ausgebildete, zur Achse 2 hin vorspringende umlaufende Sicke 15 eingreift, wodurch die Anschlag- und Distanzhülse 8 mit dem Gehäuse 1 fest verbunden wird und wodurch ihre läge in Richtung der Achse 2 relativ zum Gehäuse 1 definiert wird. Das Gehäuse 1 ist am Ende 4 mit einer den Führungs-Ring 10 umgreifenden Umbördelung 16 versehen, wodurch wiederum der Führungs-Ring 10 im Gehäuse 1 festgelegt wird. Durch das Einrollen der Sicke 15 einerseits und das Anbringen der Umbördelung 16 andererseits wird auch der Abstand des Führungs-Rings 10 von der Hülse 8 und damit die Vorspannung der Dichtung 11 in Richtung der Achse 2 zwischen dem Ring 10 und der Hülse 8 vorgegeben. Durch diese Vorspannung in Richtung der Achse 2 erfolgt eine Verspannung in radialer Richtung, d.h. durch diese Vorspannung in Richtung der Achse 2 wird auch die Anpreßkraft vorgegeben, mit der der Außen-Dichtungsring 11 gegen die Innenwand 7 und der Innen-Dichtungsring 13 gegen die Kolbenstange 3 anliegt.

In der Innenwand 7 des Gehäuses 1 ist ein durch eine Längssicke gebildeter Überström-Kanal 17 ausgebildet, durch den Druckgas am Kolben 6 vorbei aus dem zwischen dem Kolben 6 und dem verschlossenen Ende 5 begrenzten Gehäuseraum 18 in den zwischen dem Kolben 6 und der Führung begrenzten Gehäuseraum 19 und umgekehrt strömen kann. Das Gehäuse 1 ist teilweise oder vollständig mit Druckgas gefüllt.

Das Gehäuse 1 weist an seinem Ende 5 einen angeschweißten Ring 20 mit einem Gewindezapfen 21 auf, die beide konzentrisch zur Achse 2 angeordnet sind. Auf dem Gewindezapfen 21 ist eine Kugelpfanne 22 eines Winkelgelenks aufgeschraubt, die hierzu eine zylindrische Öffnung 23 mit einem entsprechenden Innengewinde 24 aufweist. Eine solche Kugelpfanne 22 kann selbstverständlich auch auf das am Ende der Kolbenstange 3 angebrachte Gewinde 25 aufgeschraubt werden.

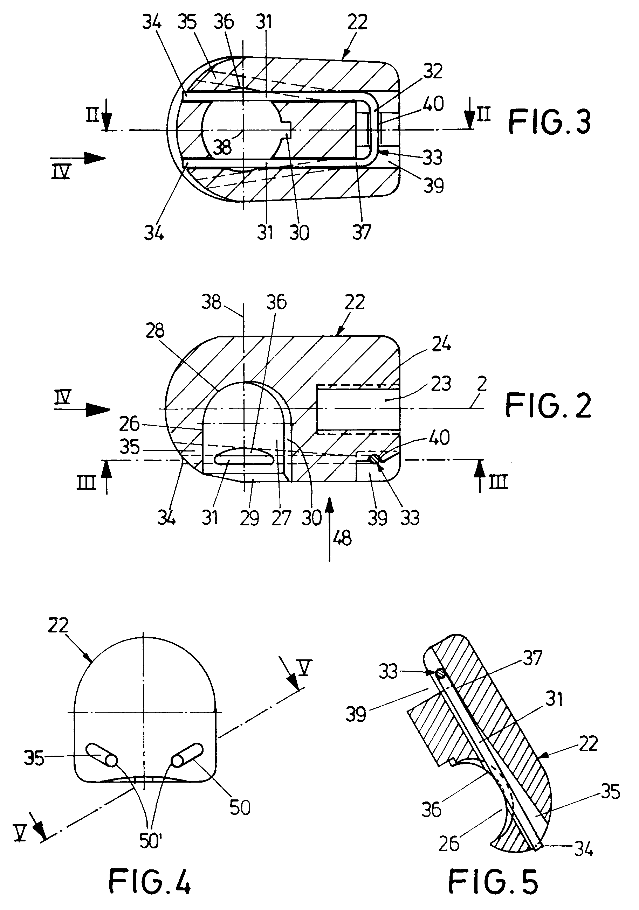

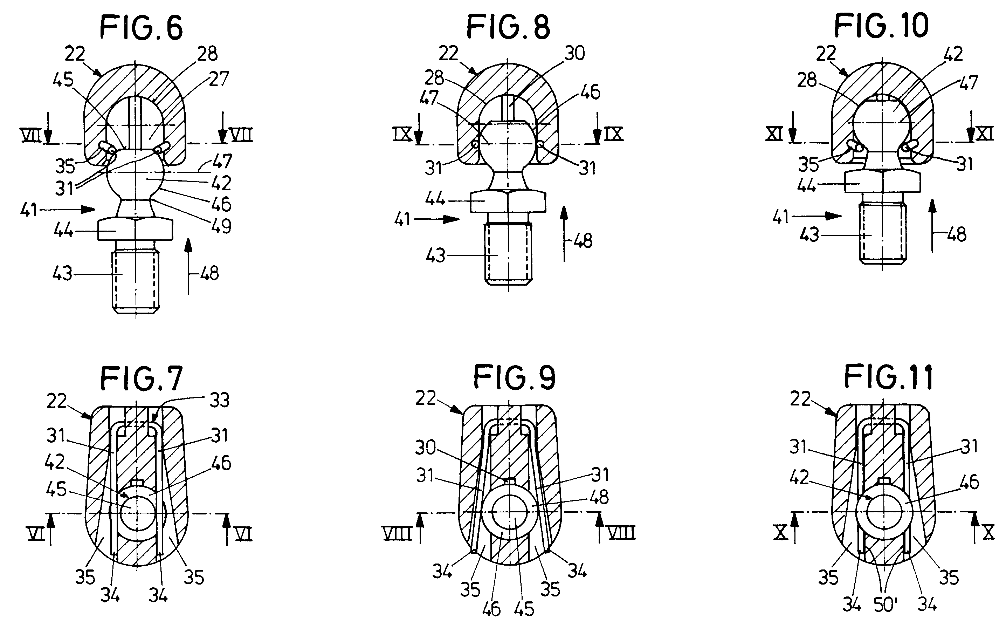

Der Aufbau der Kugelpfanne 22 ist im einzelnen in den Fig. 2 bis 5 dargestellt. Die Montage eines Zapfens zur Herstellung eines kompletten Winkelgelenks ist in den Fig. 6 bis 11 dargestellt.

Die Kugelpfanne 22 weist in üblicher Weise eine Ausnehmung 26 auf, die einen nach außen offenen im wesentlichen zylindrischen Einschubbereich 27 und einen diesen abschließenden halbkugelförmigen Abstützbereich 28 aufweist. Von der Einschuböffnung 29 erstreckt sich über den gesamten Einschubbereich 27 und den Abstützbereich 28 eine Schmiernut 30.

Zur Halterung eines Kugelzapfens sind als Sicherungselement zwei Federstäbe 31 vorgesehen, die mit einem Querschenkel 32 zu einem Federbügel 33 verbunden sind. Die Federstäbe 31 sind benachbart zum Querschenkel 32 festgelegt, während sie zu ihren freien Enden 34 hin in Führungskanälen 35 der Kugelpfanne 22 quer zu ihrer Längsrichtung verschiebbar gelagert sind. Diese Führungskanäle 35 durchsetzen den Einschubbereich 27.

Die Führungskanäle 35 verlaufen dort, wo sie den Einschubbereich 27 durchsetzen, wo also die Kugelpfanne 22 jeweils eine den Einschubbereich 27 mit den Führungskanälen 35 verbindende Durchbrechung 36 aufweist, parallel zur Achse 2, wie insbesondere Fig. 2 und 5 entnehmbar ist. Hier liegen die Federstäbe 31 also ebenfalls parallel zur Achse 2 und durchsetzen im Bereich der jeweiligen Durchbrechung 36 den Einschubbereich 27. Die Führungskanäle 35 erweitern sich zum freien Ende 34 der Federstäbe 31 hin. An den den freien Enden 34 abgewandten ortsfest festliegenden Enden 37 der Federstäbe 31 haben die Führungskanäle 35 also nur einen Querschnitt, der dem Querschnitt der Federstäbe 31 entspricht. Sie erweitern sich dann von der Mittelachse 38 der Ausnehmung 26 nach außen und sind gleichzeitig geneigt, und zwar in Richtung zum Abstützbereich 28 hin. Die Aufweitung nach außen ist Fig. 2 und 4 entnehmbar, während die erwähnte Neigung Fig. 3 und 5 entnehmbar ist. Wie aus Fig. 2 und 5 ersichtlich ist, verlaufen die Führungskanäle 35 dort, wo sie den Einschubbereich 27 der Ausnehmung 26 tangieren, derart, daß sie einen ausreichend freien Querschnitt zur Aufnahme der Federstäbe 31 bilden.

Bei dem Ausführungsbeispiel nach den Fig. 2 bis 5 sind die Führungskanäle 35 an ihrem den festliegenden Enden 37 der Federstäbe 31 zugeordneten Abschnitten nach außen offen. Sie münden in eine Hinterschneidung 39 der Kugelpfanne 22 ein, in der auch eine Klemm-Ausnehmung 40 ausgebildet ist, in die der Querschenkel 32 des Federbügels 33 eingerastet werden kann.

Wie aus den Fig. 6 bis 11 hervorgeht, weist ein in die Kugelpfanne 22 einzurastender Kugelzapfen 41 einen Kugelkopf 42 und als Befestigungselement einen Gewindezapfen 43 auf, der mit einem anzulenkenden Teil verbunden wird. Zwischen dem Kugelkopf 42 und dem Gewindezapfen 43 ist eine Mehrkantfläche 44 zum Angriff eines Schraubenschlüssels od.dgl. ausgebildet. Der Kugelkopf 42 weist an seinem dem Gewindezapfen 43 abgewandten Ende eine Abflachung 45 auf, d.h. der Kugelkopf 42 hat die Form einer Kugelkalotte.

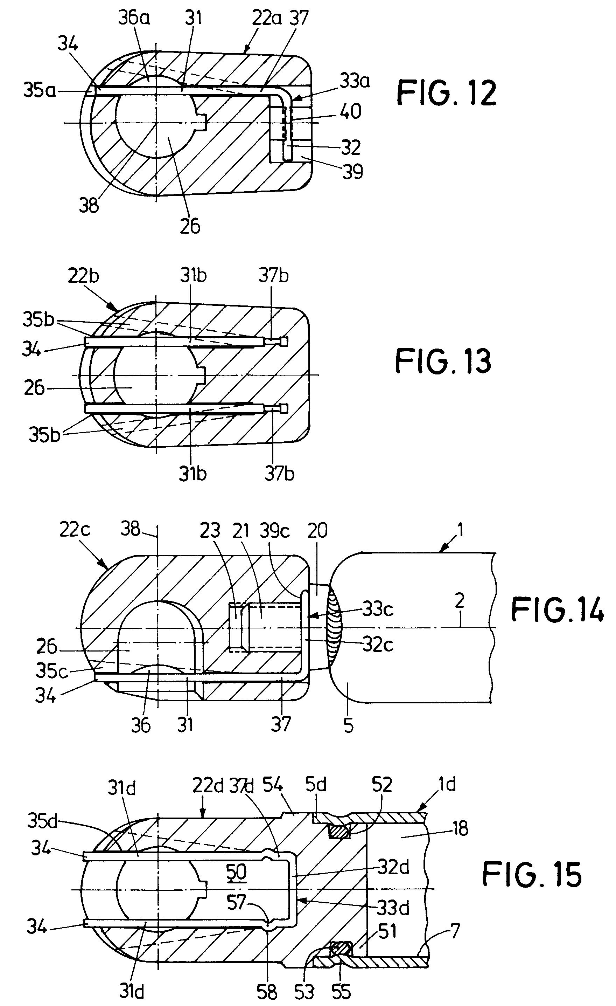

Zur Montage des Kugelzapfens 41 wird der Kugelkopf 42 durch die Einschuböffnung 29 in den Einschubbereich 27 der Ausnehmung 26 eingeschoben, und zwar in Richtung der Mittelachse 38. Die den Einschubbereich 27 durchsetzenden Teile der Federstäbe 31, also die Teile der Federstäbe 31, die durch die Durchbrechungen 36 in den Einschubbereich 27 hineinragen, kommen zur Anlage an der Kugelfläche 46 des Kugelkopfes 42, und zwar in der Nähe der Abflachung 45. Beim weiteren Hineindrücken des Kugelkopfes 42 in die Ausnehmung 26 werden entsprechend der Darstellung in den Fig. 8 und 9 die Federstäbe 31 von der zwischen der Abflachung 45 und der Mittelebene 47 des Kugelkopfes 42 befindlichen Kugelfläche 46 auseinandergedrückt, wobei die Federstäbe 31 entsprechend der geschilderten Ausgestaltung der Führungskanäle 35 einerseits auseinandergespreizt und gleichzeitig in der Einschubrichtung 48 des Kugelkopfes 42 ausgelenkt werden. Wenn anschließend der Kugelkopf 42 in den Abstützbereich 28 geschoben wird, in dem also die Kugelfläche 46 im Abstützbereich 28 der Kugelpfanne 22 anliegt, dann schnappen die Federstäbe 31 in ihre Ausgangslage zurück, wie es in den Fig. 10 und 11 dargestellt ist, wo die freien Enden 34 der Federstäbe 31 gegen eine Anlagefläche 50' jedes Führungskanals 35 anliegen. Sie liegen hierbei in der den Kugelkopf 42 in Richtung zur Mehrkantfläche 44 begrenzenden Einschnürung 49 gegen die Kugelfläche 46 an. Wenn jetzt der Kugelzapfen 41 entgegen der Einschubrichtung 48 belastet wird, dann werden die Federstäbe 31 nicht in Richtung der Erweiterung der Führungskanäle 35, sondern senkrecht hierzu gegen deren Begrenzungswand 50 gedrückt. Die Führungsstäbe 31 sind bei Belastung in Einschubrichtung 48 also nur an einem Ende 37 festgelegt, während sie gegen Belastungen entgegen der Einschubrichtung 48 an beiden Enden 34, 37 festgelegt sind. Ein Spreizen der Federstäbe 31 und damit ein Herausziehen des Kugelzapfens 41 aus der Kugelpfanne 22 ist durch Zugkräfte auf den Kugelzapfen 41 entgegen der Einschubrichtung 48 nicht durchführbar. Vielmehr müssen hierzu die nach außen offen liegenden freien Enden 34 der Federstäbe 31 mittels eines geeigneten Werkzeuges auseinandergespreizt werden. Alternativ kann auch der Querschenkel 32 aus der Klemm-Ausnehmung 40 ausgerastet werden und anschließend der gesamte Federbügel 33 aus der Kugelpfanne 22 herausgezogen werden.

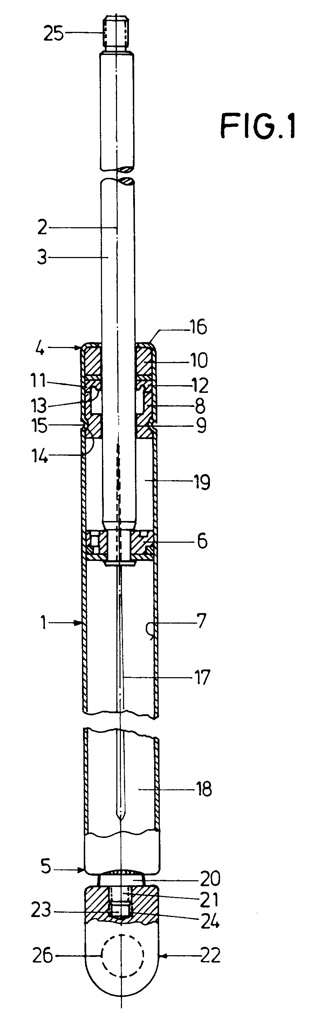

Bei allen nachfolgenden Ausführungsbeispielen werden Teile, die mit den Teilen des Ausführungsbeispiels nach den Fig. 1 bis 11 identisch sind, mit einem identischen Bezugszeichen versehen, ohne daß es einer erneuten Beschreibung bedarf. Konstruktiv geringfügig andere, funktionell aber identische Teile werden mit derselben Bezugsziffer aber mit einem zusätzlichen Buchstaben a, b ..... markiert, ohne daß es im Einzelfall einer besonderen Beschreibung bedarf.

Das Ausführungsbeispiel nach Fig. 12 ist dem nach den Fig. 1 bis 11 fast identisch. Es unterscheidet sich nur dadurch, daß die Kugelpfanne 22a nur einen Führungskanal 35a aufweist und daß dementsprechend der Federbügel 33a nur einen Federstab 31 aufweist. Der Führungskanal 35a ist etwas näher zur Mittelachse 38 hin versetzt, d.h. die Durchbrechung 36a ist etwas größer als die jeweilige Durchbrechung 36 bei dem Ausführungsbeispiel nach den Fig. 1 bis 11.

Das Ausführungsbeispiel nach Fig. 13 unterscheidet sich von dem nach den Fig. 1 bis 11 dadurch, daß die Federstäbe 31b nicht miteinander verbunden sind, sondern mit ihrem festliegenden Ende 37b am zugehörigen Ende des Führungskanals 35b mit in die Kugelpfanne 22b eingespritzt oder eingepreßt sind.

Das Ausführungsbeispiel nach Fig. 14 unterscheidet sich von dem nach den Fig. 1 bis 11 dadurch, daß die Federstäbe 31 zu einem Federbügel 33c mittels eines U-förmig ausgebildeten Querschenkels 32c verbunden sind. Dieser U-förmige Querschenkel 32c ist in einer die zylindrische Öffnung 23 umgebenden Hinterschneidung 39c der Kugelpfanne 22c angeordnet, so daß er beim Anschrauben der Kugelpfanne 22c auf den Gewindezapfen 21 zur Anlage gegen den Ring 20 gebracht wird, wodurch die Federstäbe 31 in ihrer Längsrichtung unverschiebbar und unverlierbar festgelegt werden.

Die Ausführungsform nach Fig. 15 unterscheidet sich von den zuvor geschilderten Ausführungsformen durch die Art der Befestigung am Gehäuse der Gasfeder. Die Kugelpfanne 22d ist hierbei gleichzeitig als Verschlußstopfen für das Gehäuse 1d der Gasfeder ausgestaltet. Die Kugelpfanne 22d weist einen zylindrischen Abschnitt 51 auf, der zur Anlage an der Innenwand 7 des Gehäuses 1d kommt. Dieser zylindrische Abschnitt 51 ist mit einer Ringnut 52 versehen, in der eine Ringdichtung 53 angeordnet ist, die gegen die Innenwand 7 zur Anlage kommt. Das Ende 5d des Gehäuses 1d kommt zur Anlage gegen einen Ringbund 54 der Kugelpfanne 22d, wodurch die Läge der Kugelpfanne 22d relativ zum Gehäuse 1d axial definiert und festgelegt wird. Die Befestigung der als Verschlußstopfen dienenden Kugelpfanne 22d am Gehäuse 1d erfolgt durch eine Sicke 55, die im Bereich der Ringnut 52 bzw. der Ringdichtung 53 von außen in das Gehäuse 1d gerollt wird. Diese Sicke 55 wird in die Ringnut 52 hineingedrückt, wodurch die axiale Befestigung der Kugelpfanne 22d am Gehäuse 1d erfolgt. Gleichzeitig wird hierdurch die Ringdichtung 53 verspannt, so daß sie rundum dicht in der Ringnut 52 und im Bereich der Sicke 55 an der Innenwand 7 dichtend anliegt.

Die Ausführungsform nach Fig. 15 unterscheidet sich von den zuvor geschilderten Ausführungsformen weiterhin dadurch, daß die Federstäbe 31d mit einem Querschenkel 32d zu einem Federbügel 33d verbunden sind, der in einer die Führungskanäle 35d verbindenden Ausnehmung innerhalb der Kugelpfanne 22d angeordnet ist. Die Festlegung der Federstäbe 31d und damit des Federbügels 33d erfolgt dadurch, daß die Federstäbe 31d im Bereich ihres jeweils festliegenden Endes 37d mit nach außen vorragenden Vorsprüngen 57 versehen sind, die in angepaßte Ausnehmungen 58 in der Kugelpfanne 22d einrasten.

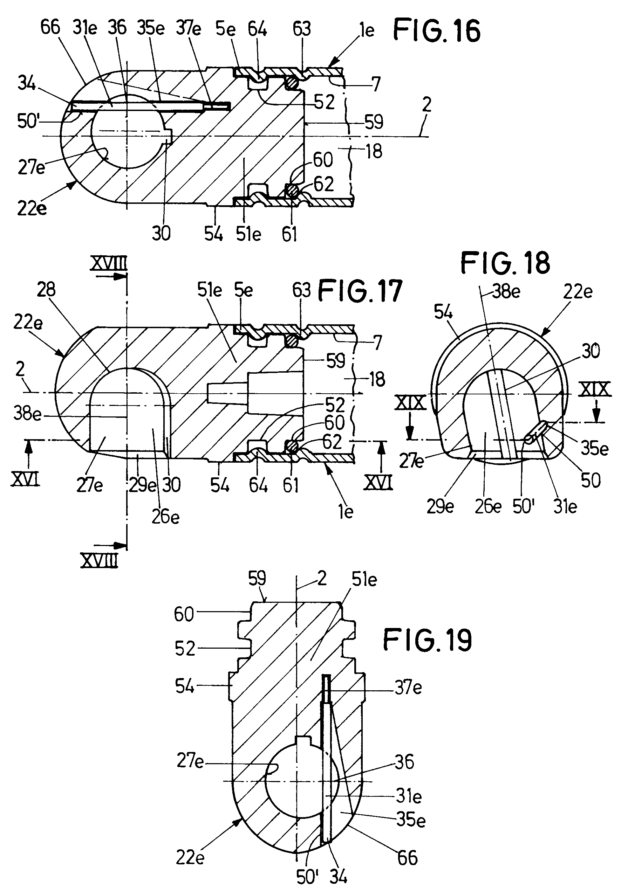

Die Ausführungsform nach den Fig. 16 bis 22 unterscheidet sich von den zuvor geschilderten Ausführungsformen durch die Art der Befestigung am Gehäuse 1e der Gasfeder. Die Kugelpfanne 22e ist hierbei gleichzeitig - wie bei der Ausführungsform nach Fig. 15 - als Verschlußstopfen für das Gehäuse 1e der Gasfeder ausgestaltet. Die Kugelpfanne 22e weist hierzu einen zylindrischen Abschnitt 51e auf, der zur Anlage an der Innenwand 7 des Gehäuses 1e kommt. Dieser zylindrische Abschnitt 51e ist mit einer Ringnut 52 versehen, die in der Nähe des Ringbundes 54 angeordnet ist. Am stirnseitigen Ende 59 des zylindrischen Abschnitts 51e ist eine zum Gehäuseraum 18 offene ringförmige Ausnehmung 60 zur Aufnahme einer Ringdichtung 61 vorgesehen, die also vom stirnseitigen Ende 59 her in diese Ausnehmung 60 eingesetzt werden kann. Diese Ausgestaltung weist den Vorteil auf, daß die ringförmige Ausnehmung 60 zuverlässig ohne Grat beim Spritzgießen der Kugelpfanne 22e hergestellt werden kann, so daß die Gefahr einer Beschädigung der Ringdichtung 61 zuverlässig ausgeschlossen wird, wenn der zylindrische Abschnitt 51e mit der Ringdichtung 61 in das Gehäuse 1e eingeschoben wird. Als Anlagefläche 62 für die Ringdichtung 61 ist am Gehäuse 1e eine rundumlaufende, nach innen zur Achse 2 vorspringende Sicke 63 vorgesehen, gegen die die Ringdichtung 61 angedrückt wird, wenn das Gehäuse 1e mit seinem Ende 5e gegen den Ringbund 54 angedrückt wird. Nach dem Füllen des Gehäuses 1e mit Druckgas wird das Gehäuse 1e mit seinem Ende 5e gegen den Ringbund 54 gedrückt, wodurch gleichzeitig die Ringdichtung 61 dichtend gegen die Anlagefläche 62 zur Anlage kommt und in die Ausnehmung 60 gedrückt wird. Anschließend wird eine Sicke 64 in das Gehäuse 1e an der Stelle eingerollt, an der sich die Ringnut 52 befindet, wodurch eine feste Verbindung zwischen der Kugelpfanne 22e und dem Gehäuse 1e hergestellt wird.

Zur Halterung eines Kugelzapfens 41 ist als Sicherungselement ein geradlinig ausgebildeter Federstab 31e vorgesehen, dessen eines, dem Gehäuse 1e benachbartes Ende 37e in der Kugelpfanne 22e befestigt ist. Zu seinem freien Ende 34 hin ist der Federstab 31e in einem in der Kugelpfanne 22e ausgebildeten Führungskanal 35e quer zu seiner Längsrichtung verschiebbar bzw. auslenkbar gelagert. Dieser Führungskanal 35e durchsetzt den Einschubbereich 27e.

Der Kugelzapfen 41 weist eine Mittelachse 65 auf, die gegenüber der Mittelachse 38e der Ausnehmung 26e und damit des Einschubbereiches 27e um einn Winkel a geneigt ist, der beispielsweise 10° beträgt.

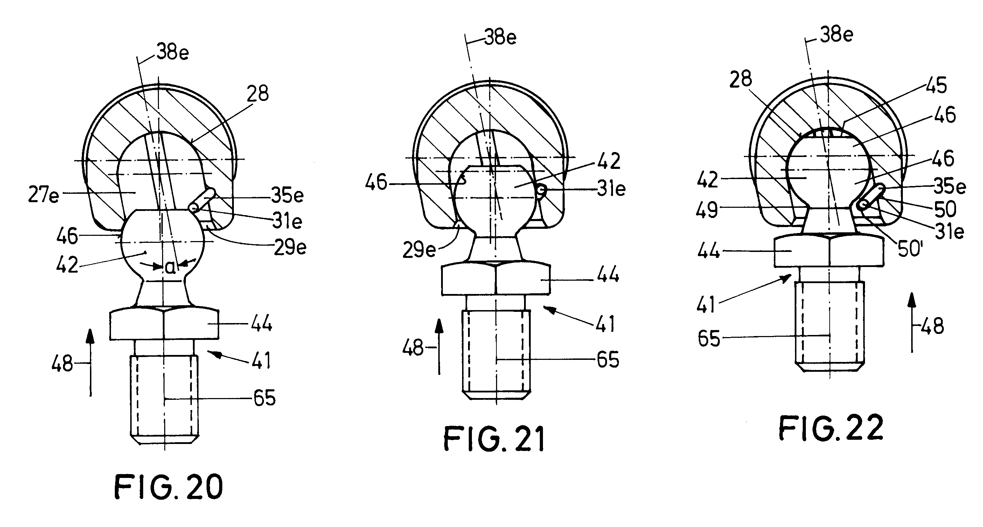

Zur Montage des Kugelzapfens 41 wird der Kugelkopf 42 durch die Einschuböffnung 29e in den Einschubbereich 27e eingeschoben, und zwar in Richtung der gegenüber der Mittelachse 38e geneigten Mittelachse 65 des Kugelzapfens 41. Beim Einschieben des Kugelkopfes 42 wird der Kugelzapfen 41 parallel zu seiner Mittelachse 65, d.h. parallel zu sich selber verschoben, und zwar entlang der Mittelachse 38e des Einschubbereiches 27e, wie insbesondere den Fig. 20 und 21 entnehmbar ist. Wenn der Kugelkopf 42 in die Ausnehmung 26e eingerastet ist, liegt das freie Ende 34 des Federstabes 31e gegen die Anlagefläche 50 des Führungskanals 35e an, die zwischen der Durchbrechung 36 und der Öffnung 66 des Führungskanals 35e ausgebildet ist (siehe Fig. 19). Der Federstab 31e liegt hierbei benachbart zu der den Kugelkopf 42 in Richtung zur Mehrkantfläche 44 begrenzenden Einschnürung 49 gegen die Kugelfläche 46 an. Wenn jetzt der Kugelzapfen 41 entgegen der Einschubrichtung 48 belastet wird, dann wird der Federstab 31e nicht in Richtung der Erweiterung des Führungskanales 35e, in der er zuvor beim Einschieben des Kugelzapfens 41 ausgelenkt worden ist, sondern senkrecht hierzu gegen die Begrenzungswand 50e des Führungskanals 35e gedrückt. Dies gilt im übrigen auch für alle zuvor beschriebenen Ausführungsbeispiele. Dieses Andrücken des Federstabes 31e, und zwar insbesondere seines freien Endes 34, gegen die Begrenzungswand 50e und die Anlagefläche 50' wird unterstützt durch die schräge Anordnung des Einschubbereiches 27e relativ zur Mittelachse 65 des Kugelzapfens 41. Die Mittelachse 38e ist - wie den Fig. 18 und 20 bis 22 entnehmbar ist - von der Seite weg geneigt, an der sich der Federstab 31e befindet.

Wie sich aus der vorstehenden Erläuterung ergibt, ist der Federstab 31e bei Belastung in Einschubrichtung 48 nur an einem Ende 37e festgelegt, während er gegen Belastungen entgegen der Einschubrichtung 48 zusätzlich am freien Ende 34 abgestützt ist. Ein Spreizen des Federstabes 31e und damit ein Herausziehen des Kugelzapfens 41 aus der Kugelpfanne 22e ist durch Ausübung von Zugkräften auf den Kugelzapfen 41 entgegen der Einschubrichtung 48 nicht durchführbar. Vielmehr muß hierzu das nach außen offen liegende und durch die Öffnung 66 greifbare freie Ende 34 des Federstabes 31e mittels eines geeigneten Werzeuges ausgelenkt werden. Dies gilt im übrigen auch für die zuvor beschriebenen Ausführungsbeispiele.

## Patentansprüche

1. Winkelgelenk, insbesondere zur Anlenkung eines pneumatischen oder hydropneumatischen Längenverstellelementes,
- mit einem Kugelzapfen (41), der einen Kugelkopf (42) mit einer Kugelfläche (46) und ein sich hieran anschließendes Befestigungselement (43, 44) aufweist,
- mit einer Kugelpfanne (22, 22a, 22b, 22c, 22d, 22e), die eine dem Kugelkopf (42) angepaßte Ausnehmung (26, 26e) zur Aufnahme und Abstützung des Kugelkopfes (42) und ein elastisches Sicherungselement aufweist, das beim Einschieben des Kugelkopfes (42) in einer Einschubrichtung (48) in die Ausnehmung (26, 26e) unter Anlage an der Kugelfläche (46) auseinandergespreizt wird und das nach völligem Einschieben des Kugelkopfes (42) in die Ausnehmung (26, 26e) die Kugelfläche (46) benachbart zum Befestigungselement (43, 44) hintergreift und gegen ein Herausziehen aus der Ausnehmung (26) sichert,
dadurch gekennzeichnet,
daß das Sicherungselement als mindestens ein eine Längsrichtung aufweisender Federstab (31, 31b, 31d, 31e) ausgebildet ist,
daß der Federstab (31, 31b, 31d, 31e) in einem in der Kugelpfanne (22, 22a, 22b, 22c, 22d, 22e) ausgebildeten Führungskanal (35, 35a, 35b, 35d, 35e) angeordnet ist,
daß der Führungskanal (35, 35a, 35b, 35d, 35e) mit einer Durchbrechung (36, 36a) die Ausnehmung (26) durchsetzt,
daß der Federstab (31, 31b, 31d, 31e) an einem Ende (37, 37b, 37d, 37e) im Führungskanal (35, 35a, 35b, 35d, 35e) derart quer zu seiner Längsrichtung festgelegt ist, daß er in einer Ausgangslage, in der der Kugelkopf (42) nicht in die Ausnehmung (26, 26e) eingesetzt ist, die Ausnehmung (26, 26e) in der Durchbrechung (36, 36a) durchsetzt,
daß der Führungskanal (35, 35a, 35b, 35d, 35e) sich zum anderen Ende (34) des Federstabes (31, 31b, 31d, 31e) in der Art erweitert, daß der Federstab (31, 31b, 31d, 31e) beim Einschieben des Kugelkopfes (42) in Einschubrichtung (48) in die Ausnehmung (26, 26e) zur Einschubrichtung (48) geneigt unter elastischer Verformung aus der Ausnehmung (26, 26e) hinausgedrückt wird und nach Einschieben des Kugelkopfes (42) in die Ausgangslage, in der er die Kugelfläche (46) hintergreift, zurückschwenkt, wobei er im Bereich des
anderen Endes (34) gegen eine Anlagefläche (50') der Kugelpfanne (22, 22a, 22b, 22c, 22d, 22e) anliegt.

2. Winkelgelenk nach Anspruch 1, dadurch gekennzeichnet,
daß der mindestens eine Führungskanal (35, 35a, 35b, 35d, 35e) nach außen offen ist.

3. Winkelgelenk nach Anspruch 1 oder 2, dadurch gekennzeichnet,
daß der mindestens eine Federstab (31, 31d) an der Außenseite der Kugelpfanne (22, 22a, 22d) festgelegt ist.

4. Winkelgelenk nach Anspruch 3, dadurch gekennzeichnet,
daß der mindestens eine Federstab (31) an der Außenseite der Kugelpfanne (22, 22a) eingerastet ist.

5. Winkelgelenk nach Anspruch 3, dadurch gekennzeichnet,
daß der mindestens eine Federstab (31d) an der Außenseite der Kugelpfanne (22d) gegen eine Anlage (20) festgelegt ist.

6. Winkelgelenk nach Anspruch 1 oder 2, dadurch gekennzeichnet,
daß der mindestens eine Federstab (31b, 31d, 31e) im Führungskanal (35b, 35d, 35e) in seiner Längsrichtung gehalten ist.

7. Winkelgelenk nach Anspruch 6, dadurch gekennzeichnet,
daß der mindestens eine Federstab (31d) elastisch in der Kugelpfanne (22d) eingerastet ist.

8. Winkelgelenk nach Anspruch 6, dadurch gekennzeichnet,
daß der mindestens eine Federstab (31b, 31e) mit Preßsitz im Führungskanal (35b, 35e) gehalten ist.

9. Winkelgelenk nach Anspruch 6, dadurch gekennzeichnet,
daß der mindestens eine Federstab (31b, 31e) in die Kugelpfanne (22b, 22e) eingespritzt ist.

10. Winkelgelenk nach einem der Ansprüche 1 bis 9, dadurch gekennzeichnet,
daß zwei Federstäbe (31, 31b, 31d) vorgesehen sind, die zu einem Federbügel (33, 33a, 33c, 33d) verbunden sind.

11. Winkelgelenk nach einem der Ansprüche 1 bis 10, dadurch gekennzeichnet,
daß der mindestens eine Führungskanal (35, 35a, 35b, 35d, 35e) zur Führung des mindestens einen Federstabes (31, 31b, 31d, 31e) beim Auseinanderspreizen eine gegenüber der Einschubrichtung (48) geneigte Begrenzungswand (50) aufweist.

12. Winkelgelenk nach einem der Ansprüche 1 bis 9 und 11, dadurch gekennzeichnet,
daß nur ein Federstab (31e) vorgesehen ist und die Ausnehmung (26e) eine Mittelachse (65) aufweist, die gegenüber einer Mittelachse (38e) des Kugelzapfens (41) um einen Winkel (a) geneigt ist.

13. Winkelgelenk nach Anspruch 12, dadurch gekennzeichnet,
daß der Winkel (a) etwa 10° beträgt.
